# EUROPÄISCHE PATENTSCHRIFT

(11) **EP 1 112 498 B1**
(45) Veröffentlichungstag und Bekanntmachung des Hinweises auf die Patenterteilung: **05.03.2008**
(21) Anmeldenummer: 99952440.8
(22) Anmeldetag: 18.08.1999
(51) Int. Cl.: G01N 30/60

(54) **TRENNSÄULEN-EINHEIT FÜR EINEN GASCHROMATOGRAPH UND VERFAHREN ZU IHRER HERSTELLUNG**
SEPARATION-COLUMN UNIT FOR A GAS-CHROMATOGRAPH AND METHOD FOR MAKING THE SAME
MODULE DE COLONNE DE SEPARATION POUR UN CHROMATOGRAPHE EN PHASE GAZEUSE ET PROCEDE DE FABRICATION DUDIT MODULE

(30) Priorität: 20.08.1998 DE 19837882
(43) Veröffentlichungstag der Anmeldung: 04.07.2001
(73) Patentinhaber: SIEMENS AKTIENGESELLSCHAFT, 80333 München (DE)
(72) Erfinder: GELLERT, Udo, D-76756 Bellheim (DE); MÜLLER, Friedhelm, D-76351 Linkenheim-Hochstetten (DE); STECKENBORN, Arno, D-13589 Berlin (DE)
(86) Internationale Anmeldenummer: PCT/DE1999/002597
(87) Internationale Veröffentlichungsnummer: WO 2000/011477

(56) Entgegenhaltungen:
- EP-A- 0 750 190
- WO-A-97/28490
- WO-A-98/54568
- US-A- 4 891 120
- US-A- 5 116 495

## Beschreibung

Die Erfindung betrifft eine Trennsäulen-Einheit für einen Gaschromatograph mit einer Trägerplatte, die auf einer Seite eine in einem vorgegebenen Linienzug verlaufende Rinne enthält und auf dieser Seite mit einer Abdeckplatte abgedeckt ist, wobei die Tiefe der Rinne größer als ihre Breite ist. Die Erfindung betrifft ferner ein Verfahren zur Herstellung einer solchen Trennsäulen-Einheit.

Eine derartige Trennsäulen-Einheit ist aus der US-A-4 891 120 bekannt.

Bei einer aus der US-A-5 583 281 bekannten Trennsäulen-Einheit, deren Herstellung in der US-A-5 575 929 beschrieben ist, wird in eine Trägerplatte aus Silizium durch isotropes Ätzen eine spiralförmig verlaufende Rinne mit halbkreisförmigem Querschnitt ausgebildet. In eine Abdeckplatte wird auf dieselbe Weise eine Nut mit ebenfalls halbkreisförmigem Querschnitt eingeätzt. Anschließend werden die beiden Platten miteinander verbunden, wobei sich die Rinne in der Trägerplatte und die Nut in der Abdeckplatte zu einer spiralförmigen Kapillare mit kreisrundem Querschnitt ergänzen. Die Kapillare läßt sich innen in bekannter Weise mit einer Trennphase belegen, um so die Trennsäule zu bilden.

In der Praxis werden jedoch Trennsäulen als Glaskapillare mit rundem Querschnitt ausgeführt, deren Innenfläche mit der Trennphase belegt ist. Aus wirtschaftlichen Gründen macht es kaum einen Sinn, solche Trennsäulen in einer Einheit, bestehend aus Trägerplatte und Abdeckplatte, auszubilden, zumal damit außer einer kleineren Bauweise keine erkennbaren technischen Vorteile erreicht werden. Vielmehr kann die Trennleistung der Trennsäule erheblich gemindert werden, wenn sich aufgrund von Geometriefehlern die Rinne in der Trägerplatte und die Nut in der Abdeckplatte nicht exakt decken und somit kein kreisrunder Querschnitt der dabei gebildeten Kapillare zustande kommt.

Trennsäulen mit sehr kleinem Innendurchmesser der Kapillare, sogenannte narrow-bore-Säulen, zeichnen sich durch eine hohe Trennleistung aus, deren optimaler Wert bei einer bestimmten Geschwindigkeit der die Trennsäule durchströmenden Probe erreicht wird. Ein weiterer Vorteil solcher Trennsäulen besteht darin, daß sich bei höheren Strömungsgeschwindigkeiten der Probe die Trennleistung nur geringfügig verringert, so daß die Analysenzeit ohne wesentliche Verschlechterung der Trennleistung drastisch verkürzt werden kann, was insbesondere für die on-line-Chromatographie wegen ihrer direkten Einbindung in den industriellen Regelprozeß von großer Bedeutung ist. Nachteilig ist dagegen die geringe Belastbarkeit dieser narrow-bore-Säulen durch die Menge der zu trennenden Probe, weil es bei größeren Probenmengen schnell zu Überladungseffekten der Trennphase und damit zu einer massiven Verschlechterung der Trennleistung kommt.

Bei der in der eingangs genannten US-A-4 891 120 offenbarten Trennsäulen-Einheit ist die Rinne beispielsweise durch "Reactive Ion Etching" in eine Trägerplatte geätzt, wobei in einem Ausführungsbeispiel die Tiefe der Rinne größer als deren Breite ist. Bei einem anderen Ausführungsbeispiel mit abgerundetem Querschnitt der Rinne ist die Tiefe der Rinne nicht größer als deren Breite. Indem die Tiefe der Rinne größer als ihre Breite ist, wird die für die chromatographische Trennung wirksame Fläche der Trennsäule im Vergleich zu ihrem Volumen vergrößert, so daß sowohl die Trennleistung als auch die Belastbarkeit der Trennsäulen-Einheit verbessert werden. Aufgrund dessen kann z. B. bei einer vorgegebenen Trennleistung die Länge der Trennsäule im Vergleich zu herkömmlichen Trennsäulen mit kreisförmigem Querschnitt reduziert werden, so daß die Baugröße der Trennsäulen-Einheit entsprechend verringert werden kann.

Es ist zwar denkbar, bei herkömmlichen Trennsäulen die Glaskapillare durch Pressen oder Walzen zusammenzudrücken, um so einen länglichen Querschnitt zu erzielen, jedoch variiert der dabei erzielte Querschnitt über seine Länge, weil die Stauchung in der Querschnittsmitte aufgrund des dort geringeren Verformungswiderstands stärker erfolgt als an den Querschnittsenden. Dies hat zur Folge, daß auch die Strömungsgeschwindigkeit der Probe und damit die chromatographische Trennung über die Querschnittslänge variieren, so daß der am Ausgang der Trennsäule als Verlauf der Konzentration der zu bestimmenden Komponente der Probe über die Zeit registrierte sogenannte Peak verbreitert und somit die Trennleistung verringert wird. Ist dagegen die Rinne nicht durch Materialverformung, sondern durch Materialabtrag gebildet, kann ein über die Tiefe der Rinne, also die Querschnittslänge, besonders gleichmäßiger Querschnitt der Trennsäule erzielt werden, wodurch die theoretisch erhöhte Trennleistung auch in der Praxis erzielt wird.

Es ist auch bekannt geworden, die Belastbarkeit einer Trennsäulen-Einheit bei gleichbleibend hoher Trennleistung durch Parallelschalten mehrerer herkömmlicher Trennsäulen mit geringem Durchmesser zu erhöhen. Hierbei besteht jedoch das Problem, daß eine nicht völlig gleichmäßige Aufteilung des Probenstroms auf die einzelnen Trennsäulen und geringste Änderungen im Durchmesser und in der Belegung der Trennsäulen zu unterschiedlichen Laufzeiten der Peaks führen, welche nach dem Zusammenführen am Ausgang der Trennsäulen-Einheit den Summen-Peak verbreitern und damit die Trennleistung verringern. Demgegenüber sind bei Trennsäulen-Einheiten mit durch Materialabtrag gebildeten Rinnen wegen der präzisen Fertigungs- und Belegungsmöglichkeiten weit höhere Trennleistungen bei Erhalt der hohen Belastbarkeit erzielbar.

Der Erfindung liegt die Aufgabe zugrunde, eine gleichmäßige Geschwindigkeitsverteilung der die Trennsäule durchströmenden Probe zu erzielen, um dadurch die Trennleistung noch weiter zu erhöhen.

Gemäß der Erfindung wird die Aufgabe dadurch gelöst, daß bei der eingangs angegebenen Trennsäulen-Einheit die Rinne im Bereich ihres Bodens einen abgerundeten, insbesondere halbrunden Querschnitt aufweist bzw. daß bei dem Verfahren zur Herstellung der Trennsäulen-Einheit der Boden der Rinne durch einen gegenüber dem Einbringen der Rinne modifizierten Materialabtrag mit abgerundetem, insbesondere halbrundem Querschnitt ausgebildet wird. Aus demselben Grund kann die Abdeckplatte auf ihrer der Trägerplatte zugewandten Seite eine sich mit dem Verlauf der Rinne deckende Nut mit einem ebenfalls abgerundeten, insbesondere halbrunden Querschnitt enthalten. Dabei ist davon auszugehen, daß das Nichtvorhandensein der Nut die Trennleistung in geringerem Maße beeinflußt als eine mangelhafte Deckungsgleichheit von Nut und Rinne.

Bei der erfindungsgemäßen Trennsäulen-Einheit ist die Tiefe der Rinne vorzugsweise um mindestens das Dreifache größer als ihre Breite, wobei die Breite in einem Bereich zwischen 100 und 150 µm und die Tiefe in einem Bereich von 500 bis 600 µm liegt.

Die Trägerplatte und die Abdeckplatte können an den Innenflächen zur Rinne in bekannter Weise mit einer Trennphase belegt sein, um so die chromatographische Trennung zu bewirken. Alternativ oder ergänzend hierzu sind die Trägerplatte und die Abdeckplatte an den Innenflächen zur Rinne porös ausgebildet, wobei über den Grad der Porösität das Adsorptionsvermögen der Innenflächen und damit ihr Trennvermögen einstellbar ist.

Um mit ein und derselben Trennsäulen-Einheit je nach Art der zu messenden Gase unterschiedliche Trennsäulenlängen einstellen zu können, kann die Trägerplatte und/oder die Abdeckplatte senkrecht zur Plattenebene verlaufende, durchgehende Löcher enthalten, die an den Enden der Rinne sowie an vorgegebenen dazwischenliegenden Stellen in die Rinne münden. Die Löcher bilden dabei den Probeneinlaß bzw. Probenauslaß für den dazwischenliegenden Abschnitt der Trennsäule. Vorzugsweise kann jedoch anstelle der Einstellung unterschiedlicher Trennsäulenlängen die Strömungsgeschwindigkeit der Probe durch die Trennsäule verändert werden, was, wie eingangs bereits erwähnt, bei höheren Geschwindigkeiten zu keiner nennenswerten Einbuße in der Trennleistung führt.

Die Rinne kann beispielsweise in Form einer einfachen Spirale in der Trägerplatte ausgebildet sein, wobei zumindest das innenliegende Ende der Spirale durch eine Öffnung in der Trägerplatte oder Abdeckplatte nach außen führt. Um abrupte Querschnittsänderungen oder Strömungsumlenkungen im Bereich des Probeneinlasses bzw. -auslasses zu vermeiden, verläuft die Rinne in der Trägerplatte vorzugsweise in Form einer Doppelspirale, wobei die Rinne an den beiden Enden der Doppelspirale seitlich aus der Trägerplatte austritt.

Alternativ verläuft die Rinne mäanderförmig und tritt an den beiden Enden seitlich aus der Trägerplatte heraus. Dies hat außerdem den Vorteil, daß neben der einfacheren Herstellbarkeit der Weg für die Probe beim Durchströmen der Trennsäule nicht über eine längere Strecke auf einer Seite der Rinne länger als auf der anderen Seite ist, so wie dies bei einer spiralförmigen Rinne der Fall ist.

Die Rinne kann durch anisotropes Ätzen in die Trägerplatte eingebracht werden. Vorzugsweise geschieht dies durch Trockenätzen, insbesondere "Reactive Ion Etching" (RIE) in Silizium. Dadurch lassen sich sehr steile Flanken der Rinne bilden, so daß der Querschnitt der Rinne und damit der Trennsäule über die Querschnittslänge lediglich in einem vernachlässigbaren Maß variiert. Alternativ kann die Rinne mittels eines Lasers in die Trägerplatte eingebracht werden, wobei ebenfalls sehr steile Rinnenflanken erzielt werden. Mit einem modifizierten Materialabtrag, beispielsweise einem anderen Ätzmittel bzw. Ätzverfahren, wie isotropes Ätzen, oder einer anderen Wellenlänge des Lasers, läßt sich der Boden der Rinne mit abgerundetem, insbesondere halbrundem Querschnitt ausbilden. Dies kann auch dadurch erreicht werden, daß die Trägerplatte aus einer ersten Materialschicht und einer zweiten Materialschicht gebildet wird, wobei die Dicke der ersten Materialschicht der Tiefe der auszubildenden Rinne entspricht und wobei die zweite Materialschicht als Stoppschicht für den die Rinne ausbildenden Materialabtrag in der ersten Materialschicht dient. Hierdurch wird insbesondere eine über die Länge der zu bildenden Trennsäule gleichmäßige Tiefe der Rinne erzielt. Der Boden der Rinne wird dabei vorzugsweise innerhalb der zweiten Materialschicht ausgebildet, die bezüglich des verwendeten Materials besonders dazu geeignet ist, in ihr Vertiefungen mit halbrundem Querschnitt auszubilden. Entsprechendes gilt auch für die Abdeckplatte, in die vorzugsweise eine sich mit dem Verlauf der Rinne in der Trägerplatte deckende Nut mit abgerundetem, insbesondere halbkreisförmigem Querschnitt eingebracht wird. Dabei können der Boden der Rinne in der Trägerplatte und die Nut in der Abdeckplatte durch Spülen der Rinne bei auf der Trägerplatte aufliegender Abdeckplatte mit einer Ätzlösung gebildet werden, wodurch sichergestellt wird, daß sich die Rinne in der Trägerplatte und die Nut in der Abdeckplatte exakt decken.

Zur weiteren Erläuterung der Erfindung wird im folgenden auf die Figuren der Zeichnung Bezug genommen; im einzelnen zeigen:
- Figur 1: ein erstes Ausführungsbeispiel der erfindungsgemäßen Trennsäulen-Einheit mit voneinander gelöster Trägerplatte und Abdeckplatte und einer in Form einer Doppelspirale verlaufenden Trennsäule,
- Figur 2: ein weiteres Ausführungsbeispiel der Trennsäulen-Einheit mit einer in Form einer einfachen Spirale verlaufenden Trennsäule,
- Figur 3: ein zusätzliches Ausführungsbeispiel der Trennsäulen-Einheit mit einer mäanderförmig verlaufenden Trennsäule und die
- Figuren 4 und 5: jeweils einen Teilquerschnitt durch die Trennsäulen-Einheit bei miteinander verbundener Trägerplatte und Abdeckplatte und mit unterschiedlichen Trennsäulen-Querschnitten.

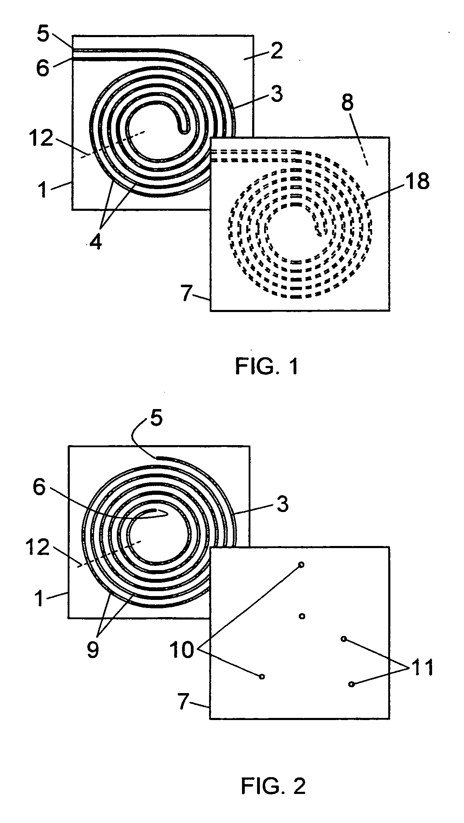

Figur 1 zeigt eine Trägerplatte 1, in die auf einer Seite 2 eine Rinne 3 eingebracht ist. Die Rinne 3 verläuft dabei in einer Doppelspirale 4 und tritt an ihren Enden 5 und 6 seitlich aus der Trägerplatte 1 aus. Wegen der besseren Darstellbarkeit sind hier nur einige wenige Spiralumläufe gezeigt. Zur Bildung einer Trennsäulen-Einheit wird die Trägerplatte 1 auf ihrer Seite 2 mit einer Abdeckplatte 7 abgedeckt, wobei die Rinne 3 und die sie überdeckenden Bereiche der Abdeckplatte 7 eine Kapillare formen, die zur Bildung einer Trennsäule an ihren Innenflächen mit einer Trennphase belegt wird. Die seitlich aus der Trägerplatte 1 austretenden Enden 5 und 6 der Rinne 3 bzw. der Trennsäule dienen zum Probeneinlaß und -auslaß. Die Abdeckplatte 7 kann auf ihrer der Trägerplatte 1 zugewandten Seite 8 eine mit der Rinne 3 deckungsgleiche Nut 18 enthalten.

Bei dem in Figur 2 dargestellten Ausführungsbeispiel ist die Rinne 3 in der Trägerplatte 1 in Form einer einfachen Spirale 9 ausgebildet. Zum Probeneinlaß und -auslaß enthält die Abdeckplatte 7 zwei senkrecht zur Plattenebene verlaufende, durchgehende Löcher 10, die nach Verbindung der beiden Platten 1 und 7 an den Enden 5 und 6 der Rinne 3 in diese münden. Die Abdeckplatte 7 kann weitere durchgehende Löcher 11 enthalten, die an vorgegebenen Stellen in die Rinne 3 münden und als Probeneinlaß bzw. -auslaß dienen, wenn nur eine Teillänge der Trennsäule genutzt werden soll; anderenfalls sind die Löcher 11 verschlossen.

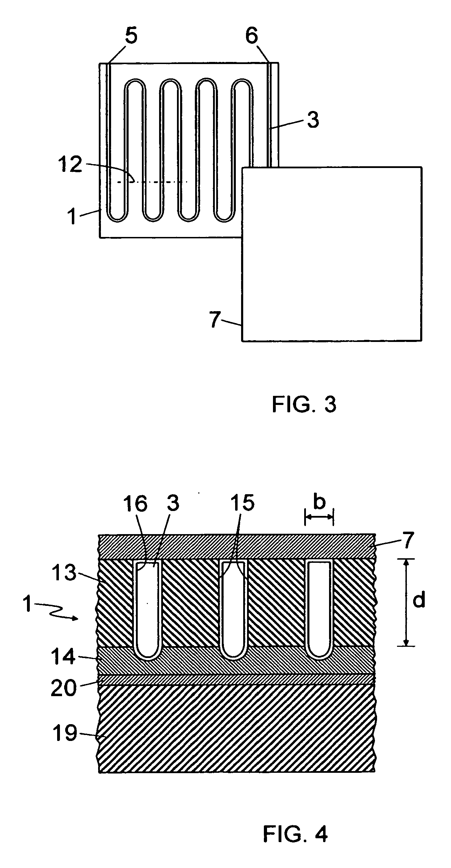

Wie Figur 3 zeigt, kann die Rinne 3 auch mäanderförmig in der Trägerplatte 1 ausgebildet sein, wobei die Rinne 3 an ihren Enden 5 und 6 wie bei dem Beispiel nach Figur 1 seitlich aus der Trägerplatte 1 austritt.

Figur 4 zeigt einen Teilquerschnitt durch die zusammengebaute Trennsäulen-Einheit nach Figur 1, 2 oder 3 entlang der Linie 12. Die Trägerplatte 1 besteht aus zwei unterschiedlichen Materialschichten 13 und 14, wobei in der an die Abdeckplatte 7 angrenzenden Materialschicht 13 die Rinne 3 mit einer Tiefe d ausgebildet ist, die etwa um das Vierfache größer als die Breite b der Rinne 3 ist. Die erste Materialschicht 13 besteht aus Silizium mit einer der Tiefe d der auszubildenden Rinne 3 entsprechenden Dicke, in das die Rinne 3 durch anisotropes Ätzen mit annähernd senkrechten Seitenflanken 15 eingebracht ist. Die zweite Materialschicht 14 dient als Ätzstopp und besteht hierzu aus Siliziumdioxid. Als Trägerplatte 1 dient hier z. B. eine 600 µm dicke Siliziumscheibe, in der durch Oxidation die zweite Materialschicht 14 aus Siliziumdioxid ausgebildet wird. Der Boden 17 der Rinne 3 weist einen abgerundeten, hier halbkreisförmigen, Querschnitt auf. Dazu wird der Boden 17 der Rinne 3 durch ein weiteres, von dem Ätzprozeß zur Ausbildung der Seitenflanken 15 der Rinne 3 in der ersten Materialschicht 13 verschiedenes Ätzverfahren in die zweite Materialschicht 14 eingebracht. In einer weiteren Siliziumscheibe 19 wird auf dieselbe Weise eine weitere Siliziumdioxid-Schicht 20 ausgebildet, wobei anschließend beide Siliziumscheiben 1 und 19 an ihren die Siliziumdioxid-Schichten 14, 20 tragenden Seiten durch "Silicon Fusion Bonding" miteinander verbunden werden. Danach wird die Rinne 3 mit einer Breite b von z.B. 150 µm in der Siliziumscheibe 1 durch "Reactive Ion Etching" erzeugt.

Bei dem gezeigten Ausführungsbeispiel ist die Innenfläche der von der Rinne 3 und der sie abdeckenden Abdeckplatte 7 gebildeten Kapillare mit einer flüssigen Trennphase 16 belegt, wobei zuvor das Silizium der ersten Materialschicht 13 im Bereich der Innenfläche der Rinne 3 in Siliziumdioxid umgewandelt werden kann. Alternativ hierzu kann das Silizium der ersten Materialschicht 13 im Bereich der Innenfläche der Rinne 3 in poröses Silizium umgewandelt werden und unmittelbar die Funktion der Trennphase übernehmen, wobei die Porösität und damit das adsorptive Verhalten des porösen Siliziums an den Seitenflanken 15 der Rinne 3 einstellbar ist.

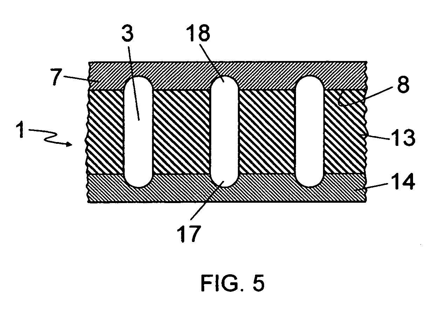

Wie das Ausführungsbeispiel nach Figur 5 zeigt, kann zusätzlich die Abdeckplatte 7 auf ihrer an der Trägerplatte 1 anliegenden Seite 8 eine Nut 18 mit ebenfalls abgerundetem Querschnitt enthalten, die, wie bereits in Figur 1 gezeigt, deckungsgleich mit der Rinne 3 in einer Spirale verläuft. Um die Deckungsgleichheit zu gewährleisten, werden die Nut 18 und der abgerundete Boden 17 der Rinne 3 in einem Arbeitsgang durch Spülen der Rinne 3 bei aufliegender Abdeckplatte 7 mit einer Ätzlösung gebildet.

## Patentansprüche

1. Trennsäulen-Einheit für einen Gaschromatograph mit einer Trägerplatte (1), die auf einer Seite (2) eine in einem vorgegebenen Linienzug verlaufende Rinne (3) enthält und auf dieser Seite (2) mit einer Abdeckplatte (7) abgedeckt ist, wobei die Tiefe (d) der Rinne (3) größer als ihre Breite (b) ist, **dadurch gekennzeichnet, daß** die Rinne (3) im Bereich ihres Bodens (17) einen abgerundeten, insbesondere halbrunden Querschnitt aufweist.

2. Trennsäulen-Einheit nach Anspruch 1, **dadurch gekennzeichnet, daß** die Abdeckplatte (7) auf ihrer der Trägerplatte (1) zugewandten Seite (8) eine sich mit dem Verlauf der Rinne (3) deckende Nut (18) mit einem abgerundeten, insbesondere halbrunden Querschnitt enthält.

3. Trennsäulen-Einheit nach Anspruch 1 oder 2, **dadurch gekennzeichnet, daß** die Tiefe (d) der Rinne (3) um mindestens das Dreifache größer als ihre Breite (b) ist.

4. Trennsäulen-Einheit nach Anspruch 1, 2 oder 3, **dadurch gekennzeichnet, daß** die Breite (b) der Rinne (3) in einem Bereich zwischen 100 und 150 µm und ihre Tiefe (d) in einem Bereich zwischen 500 und 600 µm liegt.

5. Trennsäulen-Einheit nach einem der vorangehenden Ansprüche, **dadurch gekennzeichnet, daß** die Trägerplatte (1) und die Abdeckplatte (7) an den Innenflächen zur Rinne (3) mit einer Trennphase (16) belegt sind.

6. Trennsäulen-Einheit nach einem der vorangehenden Ansprüche, **dadurch gekennzeichnet, daß** die Trägerplatte (1) und die Abdeckplatte (7) an den Innenflächen zur Rinne (3) porös ausgebildet sind.

7. Trennsäulen-Einheit nach einem der vorangehenden Ansprüche, **dadurch gekennzeichnet, daß** die Trägerplatte (1) und/oder die Abdeckplatte (7) senkrecht zur Plattenebene verlaufende, durchgehende Löcher (10, 11) enthält, die an den Enden der Rinne (3) sowie an vorgegebenen dazwischenliegenden Stellen in die Rinne (3) münden.

8. Trennsäulen-Einheit nach einem der Ansprüche 1 bis 6, **dadurch gekennzeichnet, daß** die Rinne (3) in Form einer Doppelspirale (4) verläuft und an den beiden Enden (5, 6) der Doppelspirale seitlich aus der Trägerplatte (1) heraustritt.

9. Trennsäulen-Einhei-t nach einem der Ansprüche 1 bis 6, **dadurch gekennzeichnet, daß** die Rinne (3) mäanderförmig verläuft und an ihren beiden Enden (5, 6) seitlich aus der Trägerplatte (1) heraustritt.

10. Verfahren zur Herstellung einer Trennsäulen-Einheit für einen Gaschromatograph, wobei auf einer Seite (2) einer Trägerplatte (1) durch Materialabtrag eine in einem vorgegebenen Linienzug verlaufende Rinne (3) eingebracht wird, deren Tiefe (d) größer als ihre Breite (b) ist, und wobei die Trägerplatte (1) auf dieser Seite (2) mit einer Abdeckplatte (7) abgedeckt wird, **dadurch gekennzeichnet, daß** der Boden (17) der Rinne (3) durch einen gegenüber dem Einbringen der Rinne (3) modifizierten Materialabtrag mit abgerundetem, insbesondere halbrundem Querschnitt ausgebildet wird.

11. Verfahren nach Anspruch 10, **dadurch** gekennzeichn e t , daß die Trägerplatte (1) aus einer ersten. Materialschicht (13) und einer zweiten Materialschicht (14) gebildet wird, wobei die Dicke der ersten Materialschicht (13) der Tiefe (d) der auszubildenden Rinne (3) entspricht und wobei die zweite Materialschicht (14) als Stoppschicht für den die Rinne (3) ausbildenden Materialabtrag in der ersten Materialschicht (13) dient.

12. Verfahren nach Anspruch 11, **dadurch gekennzeichnet, daß** der Boden (17) der Rinne (3) innerhalb der zweiten Materialschicht (14) ausgebildet wird.

13. Verfahren nach einem der Ansprüche 10 bis 12, **dadurch gekennzeichnet, daß** in der Abdeckplatte (7) eine sich mit dem Verlauf der Rinne (3) deckende Nut (18) mit abgerundetem, insbesondere halbkreisförmigem Querschnitt eingebracht wird.

14. Verfahren nach Anspruch 13, **dadurch** gekennzeichn e t , daß der Boden (17) der Rinne (3) in der Trägerplatte (1) und die Nut (18) in der Abdeckplatte (7) durch Spülen der Rinne (3) bei auf der Trägerplatte (1) aufliegender Abdeckplatte (7) mit einer Atzlösung gebildet werden.

15. Verfahren nach einem der Ansprüche 10 bis 14, **dadurch gekennzeichnet, daß** die Rinne (3) durch anisotropes Ätzen in die Trägerplatte (1) eingebracht wird.

16. Verfahren nach einem der Ansprüche 10 bis 14, **dadurch gekennzeichnet, daß** die Rinne (3) mittels eines Lasers in die Trägerplatte (1) eingebracht wird.

## Claims

1. Separation-column unit for a gas chromatograph with a carrier plate (1) that on one side (2) contains a channel (3) running in a predetermined line and is covered on this side (2) by a cover plate (7), with the depth (d) of the channel (3) being greater than its width (b), **characterized in that** the channel (3) has a rounded, especially semi-circular, cross-section in the area of its bottom (17).

2. Separation-column unit according to claim 1, **characterized in that** the cover plate (7), has, on its side (8) facing the carrier plate (1), a slot (18) covering the pattern of the channel (3) and with the slot (18) having a rounded, especially semi-circular, cross-section.

3. Separation-column unit according to claim 1 or 2, **characterized in that** the depth (d) of the channel (3) is at least three times wider than its width (b).

4. Separation-column unit according to claim 1, 2 or 3, **characterized in that** the width (b) of the channel (3) is in a range between 100 and 150 µm and its depth (d) is in a range between 500 and 600 µm.

5. Separation-column unit according to one of the preceding claims, **characterized in that** the carrier plate (1) and the cover plate (7) are coated with a separation phase (16) on the inner surface facing towards the channel (3).

6. Separation-column unit according to one of the preceding claims, **characterized in that** the carrier plate (1) and the cover plate (7) are formed so that they are porous on the inner surface facing the channel (3).

7. Separation-column unit according to one of the preceding claims, **characterized in that** the carrier plate (1) and/or the cover plate (7) contain through holes (10, 11) running perpendicular relative to the plane of the plate that terminate at the ends of the channel (3) and at predetermined intermediate points in the channel (3).

8. Separation-column unit according to one of claims 1 to 6, **characterized in that** the channel (3) runs in the form of a double helix (4) and emerges sideways from the carrier plate (1) at both ends (5, 6) of the double helix.

9. Separation-column unit according to one of claims 1 to 6, **characterized in that** the channel (3) runs in a meander and emerges sideways from the carrier plate (1) at both its ends (5, 6).

10. Method for producing a separation-column unit for a gas chromatograph, with a channel (3) running in a predetermined line being formed on one side (2) of a carrier plate (1) by material removal, with the depth (d) of the channel (3) being greater than its width (3) and with the carrier plate (1) being covered on this side (2) by a cover plate (7), **characterized in that** the bottom (17) of the channel (13) is formed as a rounded, especially semi-circular, cross-section by means of a material removal which is modified compared with the formation of the channel (3).

11. Method according to claim 10, **characterized in that** the carrier plate (1) is formed from a first material layer (13) and a second material layer (14), with the thickness of the first material layer (13) corresponding to the depth (d) of the channel (3) to be formed and with the second material layer (14) serving as a stop layer for the material removal forming the channel (3) in the first material layer (13).

12. Method according to claim 11, **characterized in that** the bottom (17) of a channel (3) is formed within the second material layer (14).

13. Method according to one of claims 10 to 12, **characterized in that** a slot (18) with has a rounded, especially semi-circular, cross-section and which covers the pattern of the channel (3) is formed in the cover plate (7).

14. Method according to claim 13, **characterized in that** the bottom (17) of the channel (3) in the carrier plate (1) and the slot (18) in the cover plate (7) are formed by flushing the channel (3) using an etching solution with the cover plate (7) lying against the carrier plate (1).

15. Method according to one of claims 10 to 14, **characterized in that** the channel (3) is formed in the carrier plate (1) by anisotropic etching.

16. Method according to one of claims 10 to 14, **characterized in that** the channel (3) is formed in the carrier plate (1) by means of a laser.

## Revendications

1. Unité de colonne de séparation pour un chromatographe à gaz comprenant une plaque (1) support qui comporte sur une face (2) une rainure (3) et est recouverte sur cette face (2) d'une plaque (7) de recouvrement, la profondeur (d) de la rainure (3) étant plus grande que sa largeur (b), **caractérisée en ce que** la rainure (3) a, dans la zone de son fond (17), une section transversale arrondie, notamment hémicirculaire.

2. Unité de colonne de séparation suivant la revendication 1, **caractérisée en ce que** la plaque (7) de recouvrement a, sur sa face (8) tournée avec la plaque (1) de support, une gorge (18) à recouvrement avec le tracé de la rainure (3) et ayant une section transversale arrondie, notamment hémicirculaire.

3. Unité de colonne de séparation suivant la revendication 1 ou 2, **caractérisée en ce que** la profondeur (d) de la rainure (3) est au moins trois fois plus grande que sa largeur (b).

4. Unité de colonne de séparation suivant la revendication 1, 2 ou 3, **caractérisée en ce que** la largeur (b) de la rainure (3) est comprise entre 100 et 150 µm et sa profondeur (d) est comprise entre 500 et 600 µm.

5. Unité de colonne de séparation suivant l'une des revendications précédentes, **caractérisée en ce que** la plaque (1) de support et la plaque (7) de recouvrement sont garnies sur les faces intérieures en direction de la rainure (3) d'une phase (16) de séparation.

6. Unité de colonne de séparation suivant l'une des revendications précédentes, **caractérisée en ce que** la plaque (1) de support et la plaque (7) de recouvrement sont poreuses sur les faces intérieures tournées vers la rainure (3).

7. Unité de colonne de séparation suivant l'une des revendications précédentes, **caractérisée en ce que** la plaque (1) de support et/ou la plaque (7) de recouvrement comportent des trous (10, 11) traversants qui s'étendent perpendiculairement au plan de la plaque et qui débouchent dans la rainure (3), aux extrémités de la rainure (3), ainsi qu'en des emplacements intermédiaires prescrits.

8. Unité de colonne de séparation suivant l'une des revendications 1 à 6, **caractérisée en ce que** la rainure (3) s'étend sous la forme d'une double spirale (4) et sort latéralement de la plaque (1) de support aux deux extrémités (5, 6) de la double spirale.

9. Unité de colonne de séparation suivant l'une des revendications 1 à 6, **caractérisée en ce que** la rainure (3) est sinueuse et sort à ses deux extrémités (5, 6) latéralement de la plaque (1) de support.

10. Procédé de fabrication d'une unité de colonne de séparation pour un chromatographe à gaz, dans lequel on ménage sur une face (2) une plaque (1) de support par enlèvement de matière, une rainure (3) s'étendant suivant un tracé linéaire prescrit dont la profondeur (d) est plus grande que sa largeur (b) et dans lequel on recouvre la plaque (1) de support sur cette face (2) d'une plaque (7) de recouvrement, **caractérisé en ce que** l'on donne au fond (17) de la rainure (3), par un enlèvement de matière modifié par rapport au ménagement de la rainure (3), une section transversale arrondie, notamment hémicirculaire.

11. Procédé suivant la revendication 10,
**caractérisé en ce que** l'on forme la plaque (1) de support en une première couche (13) de matériau et en une deuxième couche (14) de matériau, l'épaisseur de la première couche (13) de matériau correspondant à la profondeur (d) de la rainure (3) à former et la deuxième couche (14) de matériau servant de couche d'arrêt pour l'enlèvement de matière formant la rainure (3) dans la première couche (13) de matériau.

12. Procédé suivant la revendication 11, **caractérisé en ce que** l'on forme le fond (17) de la rainure (3) dans la couche (14) de matériau.

13. Procédé suivant l'une des revendications 10 à 12, **caractérisé en ce que** l'on ménage dans la plaque (7) de recouvrement une gorge (18) à recouvrement avec le tracé de la rainure (3) et de section transversale arrondie, notamment hémicirculaire.

14. Procédé suivant la revendication 13, **caractérisé en ce que** l'on forme le fond (17) de la rainure (3) dans la plaque (1) de support et la gorge (18) dans la plaque (7) de recouvrement en lavant la rainure (3) par une solution d'attaque alors que la plaque (7) de recouvrement repose sur la plaque (1) de support.

15. Procédé suivant l'une des revendications 10 à 14, **caractérisé en ce que** l'on ménage la rainure (3) dans la plaque (1) de support par attaque anisotrope.

16. Procédé suivant l'une des revendications 10 à 14, **caractérisé en ce que** l'on ménage la rainure (3) dans la plaque (1) de support au moyen d'un laser.
